Europäisches Patentamt

European Patent Office

Office européen des brevets

(11) Veröffentlichungsnummer: **0 210 673**
**B1**

(12) **EUROPÄISCHE PATENTSCHRIFT**

(45) Veröffentlichungstag der Patentschrift:
**19.04.89**

(51) Int. Cl.⁴: **B65G 53/46**

(21) Anmeldenummer: **86200999.0**

(22) Anmeldetag: **10.06.86**

(54) Vorrichtung zum Ausschleusen von Feststoffen aus einem unter Überdruck stehenden Behälter.

(30) Priorität: **27.07.85 DE 3526968**

(43) Veröffentlichungstag der Anmeldung:
**04.02.87 Patentblatt 87/6**

(45) Bekanntmachung des Hinweises auf die Patenterteilung:
**19.04.89 Patentblatt 89/16**

(84) Benannte Vertragsstaaten:
**BE DE FR GB IT NL**

(56) Entgegenhaltungen:
**CH-A- 470 307**
**DE-A- 2 353 288**
**DE-A- 2 625 263**
**DE-U- 1 911 485**

(73) Patentinhaber: **METALLGESELLSCHAFT AG,**
**Reuterweg 14 Postfach 3724, D-6000 Frankfurt/M.1(DE)**

(72) Erfinder: **Reimert, Rainer, Dr., Unter der Hambach 15,**
**D-6270 Idstein(DE)**
Erfinder: **Wolf, Heinz, Keltenweg 18, D-6350 Bad**
**Nauheim(DE)**

(74) Vertreter: **Rieger, Harald, Dr., Reuterweg 14,**
**D-6000 Frankfurt am Main(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung betrifft eine Schleusenkammer zum Austragen pulvriger oder körniger Feststoffe aus einem unter Überdruck stehenden Behälter, der über einen verschließbaren Auslaß mit der Schleusenkammer in Verbindung steht. Eine solche Schleusenkammer ist z.B. aus DE-A 2 738 932 bekannt.

Beim Ausschleusen feinkörniger oder pulverförmiger Schüttgüter aus unter Überdruck stehenden Behältern, z.B. Reaktoren, wird beim Entspannen der Schleusenkammer durch das ausströmende Entspannungsgas feines Material mitgerissen.

Um dieses unerwünschte Austragen der Feststoffe zu verhindern, kann man beispielsweise die Schleusenkammer nur teilweise füllen, um so einen Beruhigungsraum oberhalb der Schüttung zum Abscheiden von aus der Schüttung mitgerissenen Feststoffen beim Entspannen zu schaffen. Eine andere Möglichkeit besteht darin, die Schleusenkammer sehr langsam zu entspannen, um die Strömungsgeschwindigkeit des Gases in der Kammer niedrig zu halten.

In der DE-A 2 353 288 ist die Überführung von Feststoffen, z.B. Sand, aus einem unter Atmosphärendruck stehenden Vorratsbehälter durch eine Schleuse in einen unter Überdruck stehenden Behälter beschrieben. Die Druckerhöhung in der Schleuse erfolgt durch Zufuhr eines unter Druck stehenden Gases.

Der Erfindung liegt die Aufgabe zugrunde, die Entspannung in der Schleusenkammer auf einfache Weise durchzuführen. Auch soll bei gefüllter Schleusenkammer vermieden werden, daß beim Entspannen der Kammer unerwünschte Mengen an Feststoffen mit dem Entspannungsgas ausgetragen werden.

Erfindungsgemäß geschieht dies bei der eingangs genannten Schleusenkammer durch einen vertikal verschiebbaren, abgedichtet geführten Boden der Schleusenkammer, der als Innenbehälter ausgebildet ist und eine verschließbare Auslauföffnung aufweist. Für die Volumenvergrößerung besteht technisch keine Grenze, so daß man durch Verschieben des Bodens den Druck in der Schleusenkammer beliebig absenken kann, falls gewünscht, bis zu einem Restdruck von etwa 1 bar.

Eine Weiterbildung der Schleusenkammer besteht darin, daß der verschiebbare Boden mit einer Vorrichtung zur Rückgewinnung von Energie gekoppelt ist. Hierbei wird die Verschiebebewegung beim Entspannen der Schleuse benutzt, um außerhalb der Schleusenkammer Energie zu speichern, die dann zum Komprimieren der Gase in der Schleusenkammer wieder zur Verfügung steht. Für diese Energie-Rückgewinnung eignen sich besonders mechanische oder hydraulische Vorrichtungen.

Einzelheiten der Vorrichtung werden mit Hilfe der Zeichnung erläutert, in der in schematischer Darstellung jeweils ein Längsschnitt durch die Schleusenkammer zu sehen ist. Es zeigt:

Fig. 1 eine Ausführungsform der Schleusenkammer in gefülltem Zustand und

Fig. 2 die Schleusenkammer der Fig. 1 im entleerten Zustand.

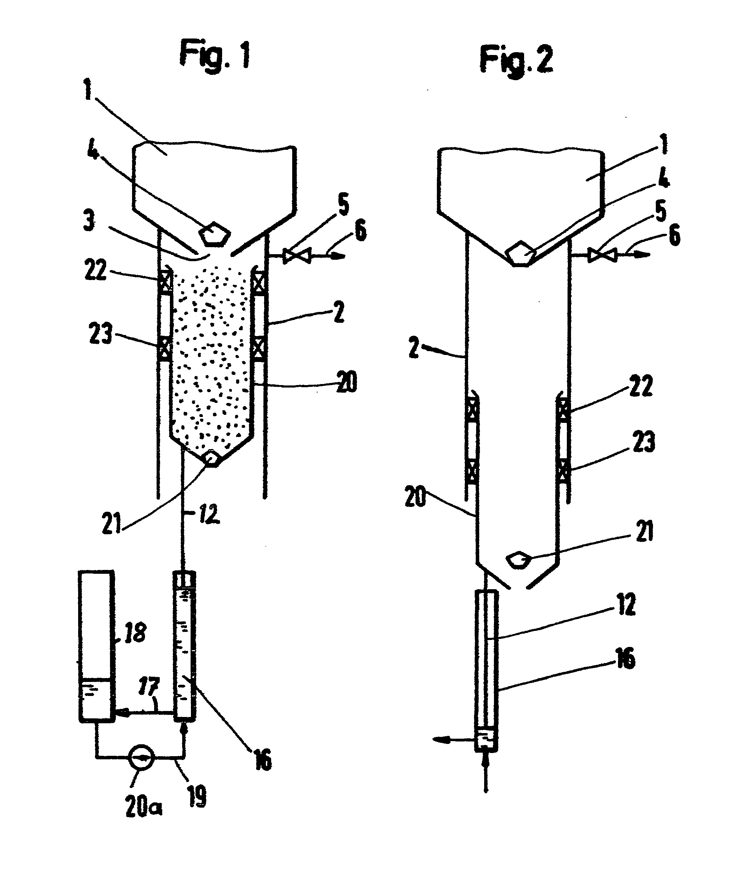

Unter dem unter Überdruck stehenden Behälter 1 der Fig. 1 und 2 befindet sich die Schleusenkammer 2, die mit dem Behälter 1 über den Auslaß 3 in Verbindung steht. Beim Behälter 1 kann es sich z.B. um einen Reaktor handeln, in welchem ständiger Überdruck herrscht. Zum Ausschleusen der im Behälter 1 befindlichen pulvrigen oder körnigen Feststoffe wird der zum Auslaß 3 gehörende Verschlußkörper 4 geöffnet, vgl. Fig. 1, so daß die Feststoffe durch den Auslaß 3 in die Schleusenkammer 2 laufen können. Dabei ist das Entspannungsventil 5 in der Leitung 6 geschlossen. Das Ventil 5 befindet sich am oberen Ende der Schleusenkammer.

Die Schleusenkammer 2 weist einen auf und ab bewegbaren Innenbehälter 20 mit Bodenventil 21 auf, durch das die Feststoffe nach der Entspannung, vgl. Fig. 2, abfließen. Der Innenbehälter 20 befindet sich in der Befüllungslage, vgl. Fig. 1, direkt unterhalb des Auslasses 3, durch den die Feststoffe bei geöffnetem Verschlußkörper 4 nach unten auslaufen. Zwischen dem Innenbehälter 20 und der Innenwand der Schleusenkammer 2 sind Dichtungen 22 und 23 angeordnet. Da die Innenwand der Schleusenkammer 2 in dem Bereich, in dem sich die Dichtungen bewegen, mit Feststoffen nicht in Kontakt kommt, werden die Dichtungen während des Betriebs geschont.

Wenn die Schleusenkammer 2 mit Feststoffen aus dem Behälter 1 gefüllt ist, vgl. Fig. 1, wird der Auslaß 3 mit dem Verschlußkörper 4 verschlossen. In der Schleusenkammer 2 herrscht dann zunächst der gleiche Überdruck wie im Behälter 1. Nun wird der Innenbehälter 20 nach unten bewegt und so das Volumen der Schleusenkammer 2 vergrößert. Dadurch reduziert sich der Druck in der Schleusenkammer 2 in der durch die Volumenverhältnisse vorgegebenen Weise. Hat der Innenbehälter 20 seine untere Endlage erreicht und beträgt der restliche Überdruck in der vergrößerten Schleusenkammer zwischen 0 und etwa 1 bar, so kann man durch Öffnen des Bodenventils 21, vgl. Fig. 2, eine geringe restliche Entspannung durch den Schleusenboden vornehmen. Die Feststoffe fließen dann am geöffneten Ventil 21 vorbei nach unten aus der Schleusenkammer ab, wobei das Entspannungsventil 5 geschlossen bleiben kann.

Ist der restliche Überdruck bei nach unten ausgefahrenem Behälter 20 in der Schleusenkammer noch beträchtlich, so empfiehlt sich zunächst die Entspannung auf 1 bar durch Öffnen des Ventils 5. Diese Entspannung kann alternativ auch gleichzeitig mit der Bewegung des Innenbehälters 20 nach unten erfolgen.

In Fig. 1 ist schematisch dargestellt, wie die beim Bewegen des Innenbehälters 20 freigesetzte Energie gespeichert und mindestens teilweise wieder zurückgewonnen werden kann. Hierzu wirkt die Führungsstange 12 mit einem Hydraulikzylinder 16 zusammen, dessen Flüssigkeit beim Bewegen des Behälters 20 nach unten durch die Leitung 17 in den Druckspeicher 18 gepreßt wird. Dabei erhöht sich der Druck im Druckspeicher 18. Will man den Behälter 20 wieder nach oben zum Auslaß 3 hin bewegen, gibt man den Druck im Druckspeicher 18 über die Leitung 19, in welcher sich auch eine Pumpe 20a befindet, zurück in den Hydraulikzylinder 16.

**Patentansprüche**

1. Schleusenkammer (2) zum Austragen pulvriger oder körniger Feststoffe aus einem unter Überdruck stehenden Behälter (1), der über einen verschließbaren Auslaß (3) mit der Schleusenkammer in Verbindung steht, gekennzeichnet durch einen vertikal verschiebbaren, abgedichtet geführten Boden (20) der Schleusenkammer, der als Innenbehälter ausgebildet ist und eine verschließbare Auslauföffnung aufweist.

2. Schleusenkammer nach Anspruch 1, dadurch gekennzeichnet, daß der Boden der Schleusenkammer mit einer Vorrichtung (16) zur Energie-Rückgewinnung gekoppelt ist.

**Claims**

1. Lock chamber (2) for discharging powdered or granular solids from a container (1) which is under excess pressure and communicates with the lock chamber by a closable outlet (3), characterised by a vertically displaceable base (20) of the lock chamber, which base is guided in a sealed manner, the base being constructed as an inner container and having a closable outlet opening.

2. Lock chamber according to Claim 1, characterised in that the base of the lock chamber is coupled to a device (16) for recovering energy.

**Revendications**

1. Sas (2), pour l'évacuation de matières solides pulvérulantes ou granulaires hors d'un récipient (1) en surpression, celui-ci étant relié au sas par un orifice de sortie (3) pouvant être fermé, caractérisé en ce qu'il comporte un fond guidé étanche et pouvant se déplacer verticalement (20), ce fond étant réalisé sous forme d'un réservoir interne et comportant un orifice de sortie pouvant être fermé.

2. Sas selon la revendication 1, caractérisé en ce que le fond de celui-ci est couplé à un dispositif (16) de récupération d'énergie.

Fig. 1    Fig. 2